# EUROPEAN PATENT APPLICATION

(11) **EP 2 787 707 A1**
(43) Date of publication of application: **08.10.2014**
(21) Application number: 12852657.1
(22) Date of filing: 03.12.2012
(51) Int. Cl.: H04L 29/02

(54) **METHOD FOR ALLOWING USER ACCESS, CLIENT, SERVER, AND SYSTEM**

(30) Priority: 01.12.2011 CN 201110393869
(71) Applicant: Peking University Founder Group Co., Ltd, Haidian District Beijing 100871 (CN); Beijing Founder Apabi Technology Ltd, Beijing 100080 (CN)
(72) Inventor: QU, Chao, Beijing 100871 (CN); WAN, Wei, Beijing 100871 (CN); LEI, Chao, Beijing 100871 (CN); LI, Xiaolei, Beijing 100871 (CN)
(74) Representative: Pfenning, Meinig & Partner GbR
(86) International application number: PCT/CN2012/085772
(87) International publication number: WO 2013/079037

(57) **Abstract**

The present invention relates to the technical field of computer application, and more particularly to a method for allowing user access, a client, a server, and a system, for solving the problem that when a user accesses a server, it cannot be determined whether the user is allowed to continue accessing the server. The method comprises: a server receiving a type identifier and/or server identifier and user identity information sent from a client, for each application accessed by a login user, the client generating a type identifier and/or server identifier corresponding to the application; the server determining the number of type identifiers and/or server identifiers received for the user according to the user identity information, and determining whether to allow access of the user. The method can solve the problem that when a user accesses a server, it is determined whether the user is allowed to continue accessing the server.

## Description

This application claims priority from Chinese Patent Application No. 201110393869.3, filed with the Chinese Patent Office on December 01, 2011 and entitled "Method for allowing user access, client, server, and system", which is hereby incorporated by reference in its entirety.

### Field of the Invention

The present invention relates to the technical field of computer application and particularly to a method for allowing user access, client, server and system.

### Background of the Invention

At present, Internet has pervaded into daily life of people, and a web operating system is an indispensable application program for people in the process of using the Internet; and the web operating system generally provides the following two approaches for a possible access of a user to a server:

In a first approach, the user is at a client, i.e., a general PC machine, and can access the server through a browser provided by the web operating system; and

In a second approach, flexible and diverse client application programs are developed in various mobile terminals via Application Programming Interfaces (APIs). The user accesses the server by way of the client application programs, which are developed via the open APIs and can operate under a variety of operating system environments. These mobile terminals include hand phones, flat panel computers, professional handheld devices and other various types of mobile devices.

As can be seen, the web operating system has to offer a service in a hybrid of the foregoing two modes to thereby better satisfy demands of numerous users.

Regardless of whether the user accesses the server through the foregoing access modes on a general PC machine or a mobile terminal, the server has to authenticate and judge user's identity and usage permission. In the prior art, it is common to authenticate statically the user's identity and the usage permission of relevant functions available to the user when the user logins to thereby ensure user information of the user to be synchronized and shared across various application scenarios and to judge from the authentication result whether the user has the right to use a specific function.

However the inventors have found that in the prior art, static authentication is performed only when the user logins, but it is impossible to determine during the access of the user to the server whether the user has the right to use some applications, that is, it is impossible to determine during the access of the user whether the user is allowed to continue accessing the server.

### Summary of the Invention

Embodiments of the invention provide a method for allowing user access so as to solve the problem that it cannot be determined whether the user is allowed to continue accessing during the access of the user to the server.

A method for allowing user access includes:
receiving, by a server, type identifiers and/or service identifiers and user identity information of a login user transmitted from a client, wherein the client generates, for each application accessed by the login user, a type identifier and/or a service identifier corresponding to the application, the type identifier is used to identify a type of the application, and the service identifier is used to identify uniquely the application; and
determining, by the server, the number of the type identifiers and/or the service identifiers received for the login user according to the user identity information, and judging whether the login user is allowed to access from a determination result.

A system for allowing user access includes:
a server configured to receive type identifiers and/or service identifiers and user identity information of a login user transmitted from a client, to determine the number of the type identifiers and/or of the service identifiers received for the login user according to the user identity information and to judge whether the login user is allowed to access from a determination result, wherein the type identifier is used to identify a type of an application, and the service identifier is used to identify uniquely the application; and
the client configured to generate, for each application accessed by the login user, a type identifier and/or a service identifier corresponding to the application.

A client includes:
a generating unit configured to generate, for each application accessed by a login user, a type identifier and/or a service identifier corresponding to the application, wherein the type identifier is used to identify a type of the application, and the service identifier is used to identify uniquely the application; and
a transmitting unit configured to transmit the type identifier and/or the service identifier generated by the generating unit and user identity information to a server.

A server includes:
a receiving unit configured to receive type identifiers and/or service identifiers and user identity information of a login user transmitted from a client, wherein the type identifier is used to identify a type of an application, and the service identifier is used to identify uniquely the application; and
a determining unit configured to determine the number of the type identifiers and/or the service identifiers received for the login user and to judge whether the login user is allowed to access from a determination result.

Apparently with the embodiments of the invention, it is judged during an access of a user to a server whether to allow the user for a continued access to the server from the number of types of applications accessed and/or the number of applications accessed by the user; and apparently the method can address the problem of judging during the access of the user to the server whether to allow the user for the continued access.

### Brief Description of the Drawings

Fig.1 is a schematic flow chart of a method for allowing user access according to an embodiment of the invention;
Fig.2 is a schematic flow chart of a first method for allowing user access according to an embodiment of the invention;
Fig.3 is a schematic flow chart of a second method for allowing user access according to an embodiment of the invention;
Fig.4 is a schematic flow chart of a third method for allowing user access according to an embodiment of the invention;
Fig.5 is a schematic structural diagram of a system for allowing user access according to an embodiment of the invention;
Fig.6 is a schematic structural diagram of a client according to an embodiment of the invention; and
Fig.7 is a schematic structural diagram of a server according to an embodiment of the invention.

### Detailed Description of the Embodiments

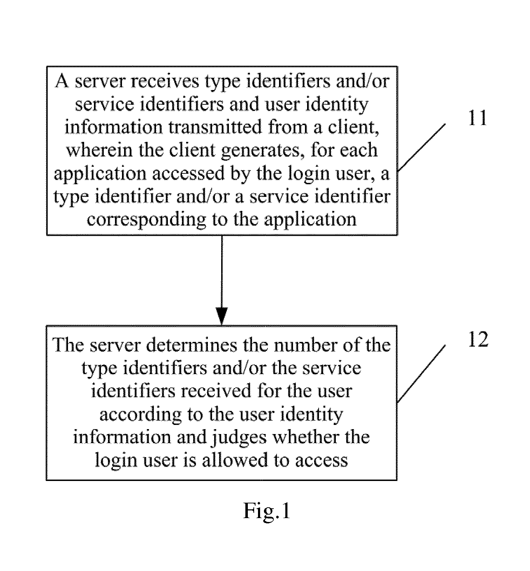

An embodiment of the invention provides a method for allowing user access, which is used to judge during an access of a user to a server whether to allow the user for a continued access to the server according to the number of types of applications accessed and/or the number of applications accessed by the user; and as illustrated in Fig. 1, a particular process is as follows:

In step 11, a server receives type identifiers and/or service identifiers and user identity information of a login user transmitted from a client, wherein the client generates, for each application accessed by the login user, a type identifier and/or a service identifier corresponding to the application, the type identifier is used to identify a type of the application, and the service identifier is used to identify uniquely the application; and

In step 12, the server determines the number of the type identifiers and/or the service identifiers received for the login user according to the user identity information and judges whether the login user is allowed to access from a determination result.

Specifically, in the step 12, judging whether the login user is allowed to access from the determination result includes:

Judging whether the total number of the type identifiers received for the user is greater than the preset number of types, and if not so, then allowing the login user to access; or judging whether the total number of the service identifiers received for the user is greater than the preset total number of services, and if not so, then allowing the login user to access; or judging whether the sum of the numbers of the type identifiers and of the service identifiers received for the user is greater than the preset total number of accesses, and if not so, then allowing the login user to access.

Preferably, in order to reduce operations at the server side, between the step 11 and the step 12, it can be further included that the client reserves one of a plurality of identical type identifiers generated.

Preferably, in order to facilitate judging whether the current login user is a legal user, it can be further included before the step 11 that the client generates account information for the login user, where the account information identifies the user identity; and at this time, specifically in the step 12, the client transmits the generated type identifiers and/or service identifiers, the account information and the user identity information to the server.

Preferably, in order to judge more accurately whether the current login user is a legal user, after the client transmits the generated type identifiers and/or service identifiers and account information to the server, and before the server determines the number of the type identifiers and/or the service identifiers received for the login user according to the user identity information, it is further included that the server judges whether the received account information is valid from a preset login condition; and at this time, the determination process is performed upon judging that the account information is valid.

Preferably, in order to simplify the operation of verifying the same user for legality when the use accesses the server at different times, after the user logins initially and the server determines that the user can continue accessing an application, the server generates a token according to the received type identifiers and/or service identifiers and account information of the user, determines a period of validity of the token, and transmits the token to the client. When this user logins the server again at another time, the use transmits the token to the server while accessing the server, and the server allows the user for a continued access upon determining that the received token does not expire. Apparently the process of and the period of time for verifying the user identity for legality can be shortened greatly.

An introduction will be made below in particular embodiments.

### First Embodiment

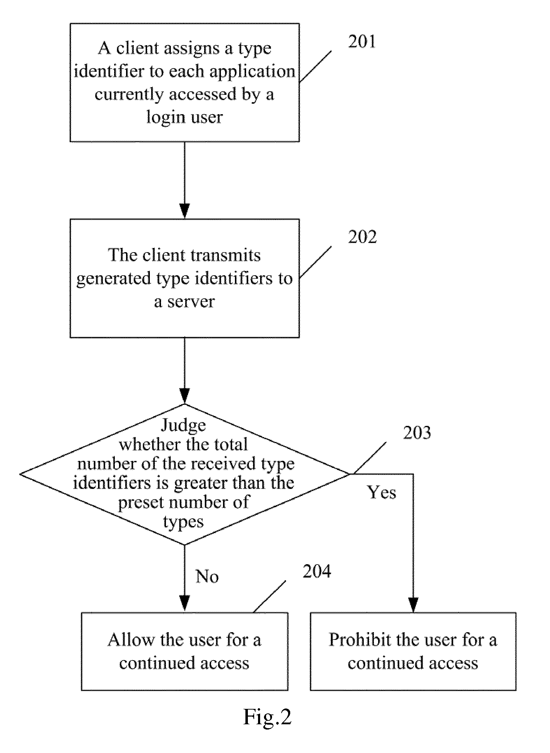

The first embodiment of the invention provides a first method for allowing user access, and as illustrated in Fig.2, a specific process is as follows:

In step 201, a client assigns a type identifier to each application currently accessed by a login user as well as user identity information of the login user, where the login user will be referred simply to as a user hereinafter, and the type identifier identifies the type of the application;

In step 202, the client transmits the generated type identifiers and user identity information to a server;

In step 203, the server judges whether the total number of the type identifiers received for the user is greater than the preset number of types from the user identity information, and if not so, then the process turns to step 204, otherwise the user is prohibited for a continued access; and

In the step 204, the user is allowed for a continued access.

### Second Embodiment

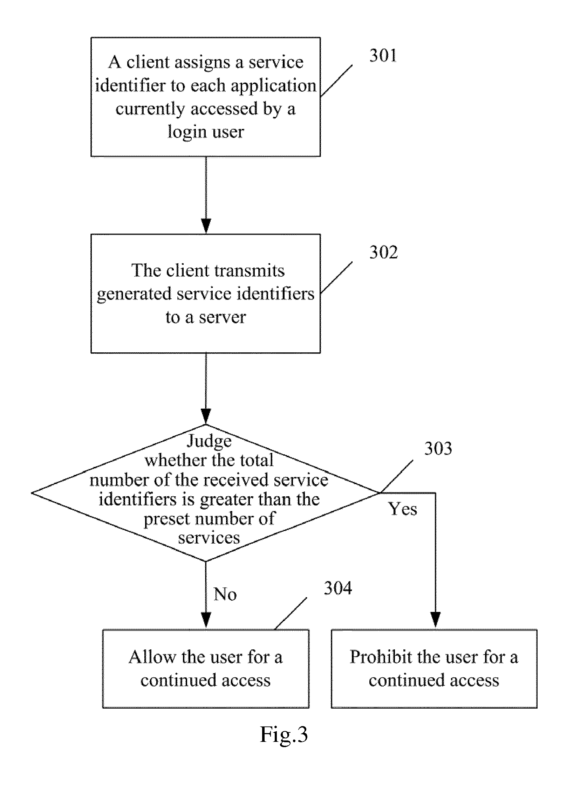

The second embodiment of the invention provides a second method for allowing user access, and as illustrated in Fig.3, a specific process is as follows:

In step 301, a client assigns a service identifier to each application currently accessed by a login user as well as user identity information of the login user, where the service identifier identifies uniquely the application, and the login user will be referred simply to as a user hereinafter;

In step 302, the client transmits the generated service identifiers and user identity information to a server;

In step 303, the server judges whether the total number of service identifiers received for the user is greater than the preset total number of services from the user identity information, and if not so, then the process turns to step 304, otherwise the user is prohibited for a continued access; and

In the step 304, the user is allowed for a continued access.

### Third Embodiment

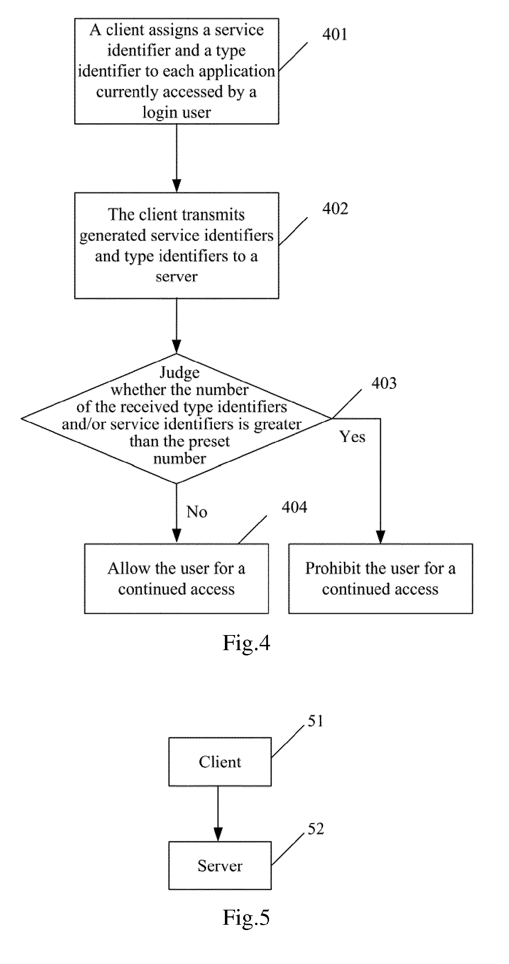

The third embodiment of the invention provides a third method for allowing user access, and as illustrated in Fig.4, a specific process is as follows:

In step 401, a client assigns a service identifier and a type identifier to each application currently accessed by a login user as well as user identity information of the login user, where the login user will be referred simply to as a user hereinafter;

In step 402, the client transmits the generated service identifiers, type identifiers and user identity information to a server;

In step 403, the server judges whether the total number of service identifiers received for the user is greater than the preset total number of services from the user identity information, and if not so, then the process turns to step 404, otherwise the user is prohibited for a continued access; or the server judges whether the total number of received type identifiers is greater than the preset number of types, and if not so, then the process turns to step 404, otherwise the user is prohibited for a continued access; or the server judges whether the sum of the number of received type identifiers and the number of received service identifiers is greater than the preset number of accesses, and if not so, then the process turns to step 404, otherwise the user is prohibited for a continued access; and

In the step 404, the user is allowed for a continued access.

Preferably, in order to judge more accurately whether the user has an access privilege, in the step 201, the step 301 or the step 401, the client can further generate account information for the login user; then in the step 202, the step 302 or the step 402, the client will further transmit the account information to the server; and after the step 202, the step 302 or the step 402 and before the step 203, the step 303 or the step 403, it is further included that upon reception of the account information, the server firstly judges from the account information whether the login user corresponding to the account information has an access privilege, and if so, then the process proceeds to the step 203, the step 303 or the step 403; otherwise it is determined that the user has no access privilege, that is, the user is prohibited for a continued access.

Preferably, in order to simplify the operations of the server, after the step 201 or the step 401 and before the step 202 or the step 402, the client can reserve one of a plurality of identical type identifiers generated; and in the step 202 or the step 402, the client transmits the simplified type identifier to the server.

Preferably, in order to simplify the operations of the server to verify the same user for legality each time the user accesses the server repeatedly in different periods of time, after the step of allowing the user for an access in all the foregoing embodiments, the server can generate a token according to the account information, the type identifiers and the service identifiers, set a period of validity for the token and transmit the generated token to the client. When the user accesses the server again, the client transmits the token corresponding to the user directly to the server, and the server determines that the client has an access privilege according to the token. When the user logouts of the server actively or the token expires, the server considers that the user has no access qualification; and the server can also transmit an access prohibition token to the client when the server does not allow the user to access.

Preferably in the foregoing embodiments, the number of types, the number of accesses and the total number of services can be set to be different according to different account information, or the number of types, the number of accesses and the total number of services can be set to be the same.

Preferably in the foregoing embodiments, the client can assign a type identifier to an application as follows:

When the user accesses the server via a PC browser, the same type identifier can be assigned to all the accessed applications; or when the user accesses the server via an API interface of the client, a different type identifier can be assigned to each accessed application.

Preferably in the foregoing embodiments, the client can further assign a service identifier to an application as follows:

When the user accesses a plurality of applications of the server through the same client, for each application, a service identifier, which is different from that of any other application, is generated; or when the user accesses the server through a PC browser of the client, a service identifier is generated each time a new session status connection is set up with the server.

As illustrated in Fig. 5, an embodiment of the invention provides a system for allowing user access, which includes:

A server 52 configured to receive type identifiers and/or service identifiers and user identity information of a login user transmitted from a client, to determine the number of the type identifiers and/or of the service identifiers received for the login user according to the user identity information and to judge whether the login user is allowed to access from a determination result, wherein the type identifier is used to identify a type of an application, and the service identifier is used to identify uniquely the application; and

The client 51 configured to generate, for each application accessed by the login user, a type identifier and/or a service identifier corresponding to the application.

The client 51 is further configured:
to reserve one of a plurality of identical type identifiers generated.

The client 51 is further configured:
to generate account information for the login user and to transmit the generated type identifiers and/or service identifiers and account information to the server 52, where the account information identifies the user identity.

The server 52 is further configured:
to judge whether the account information is valid from a preset login condition, and to determine the number of the type identifiers and/or the service identifiers received for the login user according to the user identity information upon determining that the account information is valid.

The server 52 is further configured:
to generate a token according to the received type identifiers and/or service identifiers and account information, to determine a period of validity of the token and to transmit the token to the client 51.

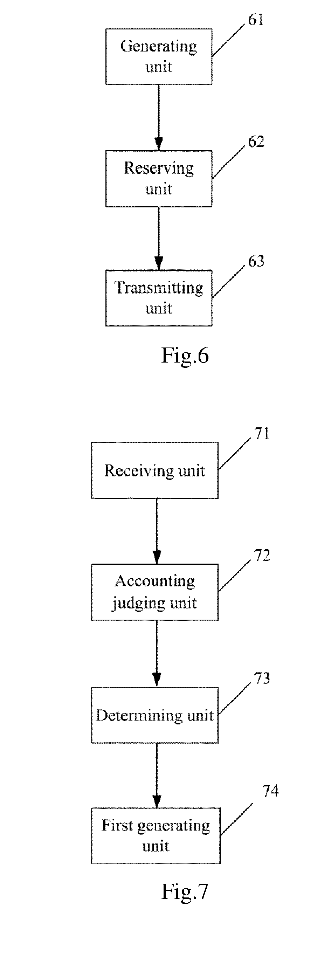

As illustrated in Fig.6, an embodiment of the invention further provides a client, which includes:
A generating unit 61 configured to generate, for each application accessed by a login user, a type identifier and/or a service identifier corresponding to the application, wherein the type identifier is used to identify a type of the application, and the service identifier is used to identify uniquely the application; and

A transmitting unit 63 configured to transmit the type identifier and/or the service identifier generated by the generating unit 61 and user identity information to a server.

The client further includes:
A reserving unit 62 configured to reserve one of a plurality of identical type identifiers generated by the generating unit 61.

The generating unit 61 is further configured to generate account information for the login user, where the account information identifies the user identity; and

The transmitting unit 63 is specifically configured to transmit the type identifiers and/or the service identifiers and account information generated by the generating unit 61 to the server.

As illustrated in Fig.7, an embodiment of the invention further provides a server, which includes:

A receiving unit 71 configured to receive type identifiers and/or service identifiers and user identity information of a login user transmitted from a client, wherein the type identifier is used to identify a type of an application, and the service identifier is used to identify uniquely the application; and

A determining unit 73 configured to determine the number of the type identifiers and/or the service identifiers received for the login user and to judge whether the login user is allowed to access from a determination result.

The receiving unit 71 is further configured to receive account information, transmitted from the client, generated for the login user, where the account information identifies an identity of the login user.

The server further includes:
An account judging unit 72 configured to judge whether the account information is valid according to a preset login condition; and

The determining and judging unit 73 is further configured to make the determination for the received type identifiers and/or service identifiers when the account judging unit 72 judges that the account information is valid.

The server 52 further includes:
A first generating unit 74 configured to generate a token according to the type identifiers and/or the service identifiers and the account information received by the receiving unit 71, to determine a period of validity of the token and to transmit the token to the client.

In summary, advantageous effects are as follows:
With the methods according to the embodiments of the invention, it is judged during an access of a user to a server whether to allow the user for a continued access to the server according to the number of types of applications accessed and/or the total number of applications accessed by the user or the sum of the number of types of accessed applications and the total number of accessed applications; and apparently the method can address the problem of judging during the access of the user to the server whether to allow the user for a continued access.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore, the invention can be embodied in the form of a computer program product embodied in one or more computer useable storage mediums (including but not limited to a disk memory, a CD-ROM, an optical memory, etc.) in which computer useable program codes are contained.

The invention has been described with reference to flow charts and/or block diagrams of the method, the device (system) and the computer program product according to the embodiments of the invention. It shall be appreciated that respective flows and/or blocks in the flow charts and/or the block diagrams and combinations of the flows and/or the blocks in the flow charts and/or the block diagrams can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow charts and/or the block(s) of the block diagrams.

These computer program instructions can also be stored into a computer readable memory capable of directing the computer or the other programmable data processing device to operate in a specific manner so that the instructions stored in the computer readable memory create manufactures including instruction means which perform the functions specified in the flow(s) of the flow charts and/or the block(s) of the block diagrams.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow charts and/or the block(s) of the block diagrams.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as these modifications and variations come into the scope of the claims appended to the invention and their equivalents.

## Claims

1. A method for allowing user access, comprising:
receiving, by a server, type identifiers and/or service identifiers and user identity information of a login user transmitted from a client, wherein the client generates, for each application accessed by the login user, a type identifier and/or a service identifier corresponding to the application, the type identifier is used to identify a type of the application, and the service identifier is used to identify uniquely the application; and
determining, by the server, the number of the type identifiers and/or the service identifiers received for the login user according to the user identity information, and judging whether the login user is allowed to access from a determination result.

2. The method according to claim 1, wherein the process of determining the number of the type identifiers and/or the service identifiers received for the login user and judging whether the login user is allowed to access according to the determination result comprises:
judging whether the total number of the type identifiers received for the login user is greater than the preset number of types, and if not so, then allowing the login user to access; or
judging whether the total number of the service identifiers received for the login user is greater than the preset total number of services, and if not so, then allowing the login user to access; or
judging whether the sum of the numbers of the type identifiers and of the service identifiers received for the login user is greater than the preset total number of accesses, and if not so, then allowing the login user to access.

3. The method according to claim 1, wherein after the client generates the type identifier and/or the service identifier corresponding to the application and before the client transmits the type identifier and/or the service identifier to the server, the method further comprises:
reserving, by the client, one of a plurality of identical type identifiers generated.

4. The method according to claim 1, wherein before the client generates, for each application accessed by the login user, a type identifier and/or a service identifier corresponding to the application, the method further comprises:
generating, by the client, account information for the login user, wherein the account information identifies a user identity; and
transmitting, by the client, the generated type identifiers and/or service identifiers to the server further comprises:
transmitting, by the client, the generated type identifiers and/or service identifiers and account information to the server.

5. The method according to claim 4, wherein after the client transmits the generated type identifiers and/or service identifiers and account information to the server and before the server determines the number of the type identifiers and/or of the service identifiers received for the login user according to the user identity information, the method further comprises:
judging, by the server, whether the received account information is valid according to a preset login condition; and
determining, by the server, the number of the type identifiers and/or of the service identifiers received for the login user according to the user identity information comprises:
determining, by the server, the number of the type identifiers and/or of the service identifiers received for the login user according to the user identity information when determining that the account information is valid.

6. The method according to claim 4, wherein after determining that the user is allowed to access, the method further comprises:
generating, by the server, a token according to the received type identifiers and/or service identifiers and account information, determining a period of validity of the token and transmitting the token to the client.

7. A system for allowing user access, comprising:
a server configured to receive type identifiers and/or service identifiers and user identity information of a login user transmitted from a client, to determine the number of the type identifiers and/or of the service identifiers received for the login user according to the user identity information and to judge whether the login user is allowed to access from a determination result, wherein the type identifier is used to identify a type of an application, and the service identifier is used to identify uniquely the application; and
the client configured to generate, for each application accessed by the login user, a type identifier and/or a service identifier corresponding to the application.

8. A client, comprising:
a generating unit configured to generate, for each application accessed by a login user, a type identifier and/or a service identifier corresponding to the application, wherein the type identifier is used to identify a type of the application, and the service identifier is used to identify uniquely the application; and
a transmitting unit configured to transmit the type identifier and/or the service identifier generated by the generating unit and user identity information to a server.

9. A server, comprising:
a receiving unit configured to receive type identifiers and/or service identifiers and user identity information of a login user transmitted from a client, wherein the type identifier is used to identify a type of an application, and the service identifier is used to identify uniquely the application; and
a determining unit configured to determine the number of the type identifiers and/or the service identifiers received for the login user according to the user identity information and to judge whether the login user is allowed to access from a determination result.

10. The server according to claim 9, wherein the receiving unit is further configured to receive account information, transmitted from the client, generated for the login user, wherein the account information identifies an identity of the login user;
the server further includes:
an account judging unit configured to judge whether the account information is valid according to a preset login condition; and
the determining unit is further configured to make the determination for the received type identifiers and/or service identifiers when the account judging unit judges that the account information is valid.
